(19) Europäisches Patentamt

European Patent Office

Office européen des brevets

(11) **EP 0 695 778 B1**

(12) **EUROPÄISCHE PATENTSCHRIFT**

(45) Veröffentlichungstag und Bekanntmachung des Hinweises auf die Patenterteilung:
**05.12.2001   Patentblatt 2001/49**

(51) Int Cl.[7]: **C08J 5/18**, B32B 27/20, B32B 27/32, B01J 13/04, C08L 23/12

(21) Anmeldenummer: **95109715.3**

(22) Anmeldetag: **22.06.1995**

(54) **Orientierte Folie aus thermoplastischem Polymer mit partikelförmigen Hohlkörpern, Verfahren zu ihrer Herstellung und ihre Verwendung**

Thermoplastic oriented film containing hollow particles, method of manufacture and its use

Feuille thermoplastique orienté contenant des particules creuses, procédé de fabrication et son utilisation

(84) Benannte Vertragsstaaten:
**BE DE ES FR GB IT NL**

(30) Priorität: **03.08.1994   DE 4427377**

(43) Veröffentlichungstag der Anmeldung:
**07.02.1996   Patentblatt 1996/06**

(73) Patentinhaber: **Ticona GmbH**
**65451 Kelsterbach (DE)**

(72) Erfinder:
• **Schreck, Michael**
**D-60529 Frankfurt (DE)**
• **Ahlers, Michael**
**D-55122 Mainz (DE)**
• **Osan, Frank**
**D-65779 Kelkheim (DE)**

(56) Entgegenhaltungen:
EP-A- 0 083 495          US-A- 4 496 620
US-A- 4 701 369          US-A- 5 350 733

• **DATABASE WPI Section Ch, Week 9250 Derwent Publications Ltd., London, GB; Class A89, AN 92-410606 & JP 04 306 647 A ( FUJI PHOTO FILM CO LTD) , 29.Oktober 1992**
• **DATABASE WPI Section Ch, Week 9003 Derwent Publications Ltd., London, GB; Class A23, AN 90-019528 & JP 01 299 832 A ( TEIJIN KK) , 4.Dezember 1989**

**Beschreibung**

Die vorliegende Erfindung betrifft eine orientierte Folie aus thermoplastischen Polymeren, die mindestens eine vakuolenhaltige Schicht enthält. Die Erfindung betrifft ferner ein Verfahren zur Herstellung der Folie sowie ihre Verwendung. Die Erfindung betrifft weiterhin die Verwendung partikelförmiger Hohlkörper.

Folien aus thermoplastischen Polymeren werden für viele verschiedene Anwendungen eingesetzt und können grob gesehen in zwei Gruppen unterteilt werden, die transparenten und die nicht transparenten Folientypen. Transparente Folien haben naturgemäß eine möglichst geringe Trübung, während die nicht transparenten Typen eine so hohe Trübung haben, daß eine sinnvolle Messung dieser Größe nicht möglich ist. Daher bestimmt man bei nicht transparenten Folien stattdessen deren Lichtdurchlässigkeit. Je nach Grad der Lichtdurchlässigkeit unterscheidet man zwischen transluzenten und opaken bzw. weißen Folien.

Nicht transparente Folien nach dem Stand der Technik enthalten in mindestens einer Schicht Pigmente oder vakuoleniniziierende Teilchen bzw. eine Kombination aus diesen, wodurch die Folien im Vergleich zu transparenten Folien eine reduzierte Lichtdurchlässigkeit haben.

Pigmente sind Teilchen, die im wesentlichen nicht zur Vakuolenbildung beim Verstrecken der Folie führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen.

Opake Folien enthalten vakuoleniniziierende Teilchen, welche mit der Polymermatrix unverträglich sind und beim Verstrecken der Folien zur Bildung von vakuolenartigen Hohlräumen führen, wobei Größe, Art und Anzahl der Vakuolen vom Material und von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen Vakuole/Polymermatrix entsteht. Im allgemeinen beträgt der mittlere Teilchendurchmesser der vakuoleniniziierenden Teilchen 1 bis 10 μm.

Übliche vakuoleniniziierende Teilchen sind anorganische und/oder organische, mit Polypropylen unverträgliche Materialien wie Oxide, Sulfate, Carbonate oder Silicate sowie unverträgliche Polymere wie Polyester oder Polyamide. "Unverträgliche Materialien" bzw. "unverträgliche Polymere" bedeutet, daß das Material bzw. das Polymere in der Folie als separates Teilchen bzw. als separate Phase vorliegt.

Die Dichte von nicht transparenten Polyolefinfolien kann innerhalb weiter Grenzen variieren und hängt von der Art und der Menge der Füllstoffe ab. Die Dichte liegt im allgemeinen im Bereich von 0,4 bis 1,1 g/cm$^3$.

Im einzelnen sind derartige nicht transparente Folien in folgenden Schriften beschrieben:

Die EP-A-0 004 633 beschreibt eine heißsiegelbare, opake, biaxial orientierte Kunststofffolie, die fein verteilte feste, insbesondere anorganische, Teilchen einer Größe von 0,2 bis 20 μm enthält und mindestens eine Heißsiegelschicht aus einem Propylen-Ethylen-Copolymeren aufweist. Zur Erzielung der Opazität sind außer den anorganischen Teilchen auch opake organische Partikel z. B. aus vernetztem Kunststoff geeignet. Die Folie soll gegenüber dem Stand der Technik in ihrer Siegelfähigkeit, in ihrem Glanz und in ihrer Bedruckbarkeit verbessert sein. Die mechanischen Eigenschaften der Folie sind noch verbesserungsbedürftig. Bei Einsatz von anorganischen Teilchen zeigt die Folie unerwünschtes Auskreiden beim Konfektionieren und bei der Weiterverarbeitung.

Die EP-A-0 083 495 beschreibt eine undurchsichtige, biaxial orientierte Folie mit satiniertem Aussehen und einem Oberflächenglanz von größer als 100 %, die mindestens einen kugelförmigen Feststoffpartikel je Vakuole enthält. Des weiteren umfaßt die Folie auf beiden Oberflächen der Kernschicht eine porenfreie, transparente, thermoplastische Mantelschicht, die eine die Optik der Folie bestimmende Dicke aufweist. Als Material für den Feststoffpartikel wird z. B. Nylon angegeben. Die Teilchen haben in der Regel einen Durchmesser, der größer als 1 μm ist. Auch bei diesen Folien sind die mechanischen Eigenschaften, insbesondere die Foliensteifigkeit noch verbesserungsbedürftig.

Die Aufgabe der vorliegenden Erfindung bestand darin, eine nicht transparente Polyolefinfolie zur Verfügung zu stellen, bei der die Transluzenz bzw. die Opazität durch einfache Maßnahmen eingestellt und in einem weiten Maße variiert werden kann. Des weiteren soll die Folie nicht auskreiden und gute mechanische und homogene optische Eigenschaften aufweisen. Insbesondere sind eine hohe Foliensteifigkeit und ein hoher Glanz besonders wünschenswert. Grundsätzlich besteht das Bedürfnis, die Folie kostengünstig und wirtschaftlich herzustellen.

Diese Aufgabe wird gelöst durch eine Folie der eingangs genannten Gattung, deren kennzeichnendes Merkmal darin besteht, daß die vakuolenhaltige Schicht partikelförmige Hohlkörper enthält, die im wesentlichen aus Polymer bestehen, das mit dem thermoplastischen Polymeren inkompatibel ist, und wobei der partikelförmige Hohlkörper 1-20 konkave Oberflächensegmente hat, oder das im Hohlkörper eingeschlossene Volumen gegen null geht und der Hohlkörper im wesentlichen aus Polymerhaut besteht.

Die erfindungsgemäße Folie ist einschichtig oder mehrschichtig. Einschichtige Ausführungsformen sind wie die nachstehend beschriebene vakuolenhaltige Schicht der mehrschichtigen Folie aufgebaut. Mehrschichtige Ausführungsformen sind mindestens zweischichtig und umfassen immer die vakuolenhaltige Schicht und zumindest eine weitere Schicht, wobei die vakuolenhaltige Schicht die Basis-, die Zwischen- oder die Deckschicht der mehrschichtigen Folie bilden kann. In einer bevorzugten Ausführungsform bildet die vakuolenhaltige Schicht die Basisschicht der Folie mit mindestens einer, vorzugsweise mit beidseitigen Deckschicht/en, wobei gegebenenfalls zwischen der vakuolenhaltigen Basisschicht und der/den Deckschicht/en einseitig eine oder beidseitig nicht vakuolenhaltige oder vakuolenhaltige Zwischenschicht/en vorhanden sein kann/können. In einer weiteren bevorzugten Ausführungsform bildet die vakuolenhaltige Schicht eine Zwischenschicht der Mehrschichtfolie, welche zwischen der nicht vakuolenhaltigen Basisschicht und der Deckschicht vorhanden ist. Weitere Ausführungsformen mit vakuolenhaltiger Zwischenschicht sind fünfschichtig aufgebaut und haben beidseitig vakuolenhaltige Zwischenschichten. In einer weiteren Ausführungsform kann die vakuolenhaltige Schicht eine Deckschicht auf der vakuolenhaltigen oder nicht vakuolenhaltigen Basis- oder Zwischenschicht bilden. Die Basisschicht ist im Sinne der vorliegenden Erfindung diejenige Schicht, welche die größte Schichtdicke aufweist und vorzugsweise mehr als 40 %, insbesondere mehr als 50 %, der Gesamtfoliendicke ausmacht. Die Deckschicht ist die Schicht, welche die äußerste Schicht der Folie bildet.

Je nach ihrem vorgesehenen Verwendungszweck kann die jeweilige Ausführungsform der nicht transparenten Folie transluzent, opak oder weiß-opak sein. Unter nicht transparenten Folien werden im Sinne der vorliegenden Erfindung solche Folien verstanden, deren Lichtdurchlässigkeit nach ASTM-D 1003-77 unter 95 %, vorzugsweise im Bereich von 5 bis 80 %, liegt. Zwischen transluzenten, opaken bzw. weiß-opaken Typen wird nach ihrer Lichtdurchlässigkeit unterschieden. Transluzente Folien haben eine Lichtdurchlässigkeit von 95 bis 70 %, und opake bzw. weiß-opake Typen haben eine Lichtdurchlässigkeit von 69 bis 0 %, vorzugsweise 69-5 %, jeweils gemessen nach ASTM-D 1003-77.

Die vakuolenhaltige Schicht der erfindungsgemäßen Folie enthält thermoplastisches Polymer, vorzugsweise ein Polyolefin, insbesondere ein Propylenpolymer, und partikelförmige Hohlkörper im wesentlichen aus inkompatiblem Polymer sowie gegebenenfalls weitere zugesetzte Additive in jeweils wirksamen Mengen. Im allgemeinen enthält die vakuolenhaltige Schicht mindestens 60 Gew.-%, vorzugsweise 70 bis 99 Gew.-%, insbesondere 80 bis 98 Gew.-%, des thermoplastischen Polymeren, bezogen auf das Gewicht der vakuolenhaltigen Schicht. Das thermoplastische Polymer, welches die vakuolenhaltige Schicht im wesentlichen aufbaut wird im folgenden auch Matrixpolymer genannt.

Thermoplastische Polymere umfassen im Sinne der vorliegenden Erfindung Polyolefine aus Olefinen mit 2 bis 25 Kohlenstoffatomen, vorzugsweise 2 bis 10 Kohlenstoffatomen, sowie Polystyrole, Polyester und Polyamide. Besonders geeignet sind Polyolefine wie Polypropylen, Polyethylen wie HDPE, MDPE, LDPE, LLDPE und VLDPE sowie Polystyrole.

Unter den Polyolefinen sind Polypropylene besonders bevorzugt. Geeignete Propylenpolymere enthalten 90 bis 100 Gew.-%, vorzugsweise 95 bis 100 Gew.-%, insbesondere 98 bis 100 Gew.-%, Propylen und besitzten einen Schmelzpunkt von 120 °C oder höher, vorzugsweise 150 bis 170 °C und im allgemeinen einen Schmelzflußindex von 0,5 g/10 min bis 8 g/10 min, vorzugs-weise 2 g/10 min bis 5 g/10 min, bei 230 °C und einer Kraft von 21,6 N (DIN 53 735). Isotaktisches Propylenhomopolymer mit einem ataktischen Anteil von 15 Gew.-% und weniger, Copolymere von Ethylen und Propylen mit einem Ethylengehalt von 10 Gew.-% oder weniger, Copolymere von Propylen mit $C_4$-$C_8$-Olefinen mit einem Olefingehalt von 10 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die vakuolenhaltige Schicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, MDPE, LDPE, LLDPE sowie VLDPE, wobei der Anteil dieser Polyolefine jeweils 15 Gew.-%, bezogen auf die Polymermischung, nicht übersteigt.

Erfindungsgemäß enthält die vakuolenhaltige Schicht bzw. die Folie bei einschichtigen Ausführungsformen partikelförmige Hohlkörper aus einem Polymer, welches mit dem Matrixpolymeren inkompatibel ist. Im allgemeinen enthält die vakuolenhaltige Schicht maximal 40 Gew.-%, vorzugsweise 1 bis 30 Gew.-%, insbesondere 1 bis 20 Gew.-%, der Hohlkörper jeweils bezogen auf das Gewicht der vakuolenhaltigen Schicht bzw. der Folie. Es wurde gefunden, daß die partikelförmigen Hohlkörper aus inkompatiblem Polymer in der Polymermatrix überraschenderweise als vakuoleniniziierender Füllstoff wirken. Bei der Streckorientierung der Folie bilden sich zwischen dem Matrixpolymer der Schicht und den partikelförmigen Hohlkörpern Mikrorisse und Mikrohohlräume, sogenannte Vakuolen, im Bereich derer das sichtbare Licht gebrochen wird. Die Folie erhält dadurch ein transluzentes oder opakes Aussehen und eine reduzierte Dichte, was sie für bestimmte Verpackungszwecke, insbesondere auf dem Lebensmittelsektor, besonders geeignet macht.

Unter partikelförmigen Hohlkörpern aus inkompatiblen Polymeren werden im Sinne der vorliegenden Erfindung solche Teilchen verstanden, bei denen eine im wesentlichen geschlossene Polymerhaut ein inneres gas- oder luftgefülltes Volumen umhüllt. Das eingeschlossene Volumen und die Form der Teilchen hängen von dem verwendeten inkompatiblen Polymeren und dem Herstellverfahren der Partikel ab. Die Größe des eingeschlossenen Volumens und die Gestalt der Teilchen können grundsätzlich innerhalb weiter Grenzen variieren.

Im allgemeinen weisen die partikelförmigen Hohlkörper eine Form auf, welche sich von runden Hohlkörpern mit konstantem Durchmesser ableitet. Diese kugel- oder ellipsenartigen Grundformen sind durch nach innen gewölbte Teilbereiche der Oberfläche mehr oder weniger stark deformiert (sogenannte Einstülpungen oder Einwölbungen oder "konkave Oberflächensegmente"). Ein einzelnes Teilchen weist 1 bis 20, vorzugsweise 2 bis 15, insbesondere 3 bis 10, solcher konkaven Oberflächensegmente auf. Die einzelnen konkaven Oberflächensegmente können mehr oder minder stark eingestülpt sein, so daß das Teilchen mit sehr wenigen und wenig ausgeprägten Einstülpungen sich im wesentlichen einer hohlen Kugel annähert. Je höher die Anzahl der konkaven Oberflächensegmente und je ausgeprägter das Maß der Einwölbungen ist, umso kleiner ist das von der Polymerhülle eingeschlossene Volumen, so daß sich in einem Grenzfall die Innenseiten der Polymerhaut berühren und das eingeschlossene Volumen gegen null geht. Man bezeichnet diesen Grenzfall auch als ein vollständig kollabiertes Teilchen, welches dann im wesentlichen nur aus der Polymerhaut besteht. Diese kollabierten Teilchen besitzen eine sehr stark gefaltete Oberfläche ohne scharfkantige Übergänge, aber mit sehr unregelmäßig geformten Einstülpungen. Die Richtungsänderungen der Oberfläche betragen mehr als 160° auf 0,1 µm Längenabmessung auf der Oberfläche.

Im allgemeinen sind die konkaven Oberflächensegmente der Partikel so weit eingewölbt, daß die Einwölbung mindestens 10 % des größten Abstands zweier Oberflächenpunkte des Partikels (maximaler Teilchendurchmesser) beträgt. Bevorzugt sind die Einwölbungen so ausgeprägt, daß sie 20 bis 95 %, insbesondere 30 bis 70 %, des maximalen Teilchendurchmessers betragen.

Die Verteilung der Formen in einer Charge von Partikeln kann in weiten Grenzen variieren, d. h. die Partikel weisen im allgemeinen keine einheitliche Geometrie auf. Als günstig haben sich Chargen erwiesen, in denen mindestens 5 %, bevorzugt 10 bis 100 %, insbesondere 60 bis 100 %, der Partikel mindestens ein konkaves Oberflächensegment, vorzugsweise 1 bis 10 derartige Segmente, aufweisen. Bevorzugt sind Chargen mit Partikeln, die so stark ausgeprägte Einwölbungen besitzen, daß sich die Innenseiten der Polymerhaut berühren und das eingeschlossene Volumen gegen null geht. Die Verteilung der Formen kann durch rasterelektronische Aufnahmen (REM) der Partikel bestimmt werden.

Die Partikel können eine glatte oder rauhe Oberfläche aufweisen. Dieses Merkmal läßt sich beispielsweise durch elektronenmikroskopische Untersuchungen, insbesondere durch Rasterelektronenmikroskopie (REM), bestimmen. Dazu werden die Partikel nach Standardmethoden für die Elektronenmikroskopie vorbereitet und kontrastiert. Als Kontrastmittel für REM-Aufnahmen haben sich Metallaufdampfungen, z. B. mit Gold, bewährt. Glatte Oberflächen von Partikeln erscheinen auf den REM-Aufnahmen als homogene Flächen mit weitgehend konstantem Grauton. Rauhigkeiten durch Störungen der Oberfläche erkennt man an unterschiedlichen Grautönen. Die Störungen haben einen Abstand von der mittleren Oberfläche der Partikel von mehr als 100 nm.

Die partikelförmigen Hohlkörper haben im allgemeinen einen maximalen Teilchendurchmesser, der bei mindestens 90 % der Partikel im Bereich von 0,2 bis 20 µm, bevorzugt 0,3 bis 7 µm, insbesondere 0,5 bis 3 µm, liegt.

Die Partikelgrößenverteilung wird mittels Photonenkorrelationsspektroskopie (PCS), Aerosolspektroskopie und/oder Elektronenmikroskopie (REM) bestimmt. Einzelheiten zu diesen Bestimmungsmethoden sind in J.P. Fischer "Progress in Kolloid and Polymer Science", 77, Seite 180 - 194, 1988 beschrieben. Die Schüttdichte der partikelförmigen Hohlkörper beträgt höchstens 60 %, vorzugsweise höchstens 30 %, insbesondere höchstens 15 %, der Dichte des zur Herstellung der partikelförmigen Hohlkörper verwendeten Polymeren.

Die partikelförmigen Hohlkörper bestehen im wesentlichen aus einem Polymeren, welches mit dem Matrixpolymeren der Folienschicht inkompatibel ist. Inkompatibel heißt auch unverträglich und bedeutet, daß dieses inkompatible Polymere mit dem Matrixpolymeren nicht mischbar ist und daher in einer separaten Phase vorliegt, die in rasterelektronischen oder lichtmikroskopischen Aufnahmen leicht zu erkennen ist. Eine Mischung aus zwei inkompatiblen Polymeren weist bei der Aufnahme eines DSC zwei getrennte Peaks auf, sofern die beiden Polymeren nicht zufällig eine nahezu gleiche Glastemperatur bzw. einen nahezu gleichen Schmelzpunkt haben.

Zur Herstellung der Hohlkörper können grundsätzlich alle Polymeren eingesetzt werden, die mit dem jeweiligen verwendeten Matrixpolymeren inkompatibel sind und in einem Sprühtrocknungsverfahren angewendet werden können, d. h. sie sollten beispielsweise in einem für den jeweiligen Prozeß geeigneten Lösungsmittel hinreichend löslich sein. Die Glastemperatur $T_G$ bzw. die Erweichungstemperatur $T_V$ oder der Schmelzpunkt $T_M$ des inkompatiblen Polymeren sollte im allgemeinen so hoch liegen, daß das Teilchen bei den Temperaturbedingungen, die während der Folienherstellung üblich sind, weitgehend formstabil bleibt, d. h. die $T_G$ bzw. $T_M$ sollte mindestens 5 °C, vorzugsweise 15 bis 180 °C, insbesondere 15 bis 150 °C, über der Mindesttemperatur liegen, bei der die Extrusion des Matrixpolymeren noch möglich ist.

Bei der Verwendung von Polypropylen als Matrixpolymer wird üblicherweise bei einer Temperatur von 220 bis 290 °C extrudiert. Die $T_G$ des mit Polypropylen unverträglichen Matrixpolymeren sollte daher im Bereich von 225 bis 390 °C, vorzugsweise 235 bis 360 °C, liegen.

Im einzelnen sind die folgenden inkompatiblen Polymeren, die die obengenannten Bedingungen erfüllen, für die Herstellung der Hohlkörper besonders geeignet: Syndiotaktisches Polystyrol, Polyphenylensulfid (PPS), Polyetherketone (PEK), Polyamide (PA), Polyethylenterephthalat (PET), Polybutylenterephthalat (PBT), Polyaramide, Polyimide, halogenierte Polymere, amorphe und teilkristalline Cycloolefinpolymere und Polymere, welche durch ringöffnende Polymerisation hergestellt werden (Methathesepolymerisation).

Die vorstehend genannten Polymeren sind entweder handelsübliche Produkte, die in der kommerziell erhältlichen Form zur Herstellung der Hohlkörper direkt verwendet werden können, beispielsweise ® Ultramid der BASF AG (PA), ® Ultradur A der BASF AG (PET), ® Celanex der Hoechst AG (PBT) oder ® Fortron der Hoechst AG (PPS), oder die entsprechenden Polymeren sowie Verfahren zu ihrer Herstellung sind bereits bekannter Stand der Technik. Im einzelnen sind geeignete amorphe Cycloolefinpolymere in EP-A-0 156 464, EP-A-0 286 164, EP-A-0 475 893 und DE-A-40 36 264 beschrieben. Teilkristalline Cycloolefinpolymere und Verfahren zu ihrer Herstellung offenbart EP-A-0 503 422. Eine entsprechende Schrift für Polynorbornene ist US-A-3,330,815. Methathesepolymere sind in EP-A-0 159 464 beschrieben.

Bevorzugte Polymere für die Herstellung der Hohlkörper sind Polyethylenterephthalate und Polybutylenterephthalate sowie amorphe und teilkristalline Cycloolefinpolymere.

Zur Herstellung der partikelförmigen Hohlkörper ist insbesondere das an sich bekannte Sprühtrocknungsverfahren geeignet, bei welchem die unverträglichen Polymeren in einem geeigneten Lösungsmittel oder Lösungsmittelgemisch gelöst werden und die Lösung einer Sprühtrocknung unterworfen wird. Gegebenenfalls können auch andere Verfahren, z. B. Emulsionsverfahren oder Fällungsverfahren, zur Herstellung der erfindungsgemäßen Partikel eingesetzt werden (M. Bornschein et al, Die Pharmazie, 44, Heft 9, 1989, S. 585 ff.; Y. Kawashima et al, J. Pharm. Sciences, 81, Heft 2, 1992, S. 135 ff.).

Die Herstellung der Partikel mittels Sprühtrocknung ist bevorzugt und erfolgt beispielsweise nach dem Prinzip der Düsenversprühung. Bevorzugt ist eine Düsenversprühung im Gleichstrom, bei welcher die Richtung der versprühten Lösung und die Richtung des Luft- oder Gasstroms gleich sind. Für die Herstellung der Partikel nach diesem Verfahren haben sich beispielsweise Sprühtrockner der Firma Büchi bewährt, z. B. Büchi 190 (Büchi GmbH, Eislingen).

Bei der Sprühtrocknung wird eine Lösung, Emulsion oder Dispersion eines Polymeren (Sprühgut) mit einer Förderpumpe in eine Kammer eingespeist und in einem Luft- oder Gasstrom so versprüht, daß das Lösungsmittel ganz oder teilweise entfernt wird und sich die flüssigen Lösungströpfchen dabei in feste Partikel umwandeln. Diese Partikel werden mit dem Luft- oder Gasstrom in einen Abscheider z.B. in Form eines Zyklons geführt und abgeschieden.

Der Luft- oder Gasstrom wird mit Hilfe eines Aspirators so durch das Gerät hindurch gesaugt, daß dabei ein Unterdruck in der Kammer erzeugt wird. Mit der Regulierung der Aspiratorleistung wird einerseits die aufgeheizte Luft- oder Gasmenge und andererseits der in der Apparatur herrschende Unterdruck reguliert. Die hindurchgesaugte Luft- oder Gasmenge kann am Gerät im Bereich von 100 - 800 Nl/h eingestellt werden (Nl = Normalliter) und wird auch als Sprühflow bezeichnet. Vorzugsweise liegt der Sprühflow im Bereich von 500 - 800 Nl/h. Der eingestellte Unterdruck liegt im allgemeinen im Bereich von 10 - 100 mbar, vorzugsweise 30 - 70 mbar, unterhalb des Drucks außerhalb der Apparatur.

Damit das Lösungsmittel beim Versprühen während der zur Verfügung stehenden Kontaktzeit verdampft, muß die Temperatur des Luft- oder Gasstroms über oder in der Nähe des Siedepunktes des Lösungsmittels liegen. Diese Temperatur des durchgesaugten Luft- oder Gasstroms bezeichnet man als Eingangstemperatur. Die Eingangstemperatur kann innerhalb weiter Grenzen variieren und hängt im wesentlichen vom verwendeten Lösungsmittel und Polymer ab. Im allgemeinen liegt sie im Bereich von 15 - 250 °C, vorzugsweise 60 -250 °C, insbesondere 100 bis 210 °C.

Die Ausgangstemperatur ist die Temperatur des Luft- oder Gasstroms mit den abgeschiedenen Partikeln vor dem Eintritt in den Zyklon. Diese Ausgangstemperatur resultiert aus der Eingangstemperatur, Aspiratoreinstellung, Einstellung der Förderpumpe sowie aus der Konzentration der Sprühlösung und der Verdampfungswärme des Lösungsmittels. Sie liegt im allgemeinen im Bereich von 50 - 180 °C, vorzugsweise 60 bis 120 °C. Sie ist im allgemeinen niedriger als die Eingangstemperatur.

Für die Förderpumpe, die das Sprühgut in das Gerät einspeist, haben sich Pumpenleistungen von 100 bis 500 ml/h bewährt, insbesondere 120 bis 360 ml/h

Als Lösungsmittel oder Lösungsmittelgemische zur Herstellung der Polymerlösung, -emulsion oder -dispersion eignen sich beispielsweise Wasser, Tetrahydrofuran, Dichlormethan, Toluol, Dekalin, Petrolether, Furan, DMSO (Dimethylsulfoxid), Dioxan, Aceton und/oder aromatische und aliphatische Kohlenwasserstoffe bzw. Gemische dieser Lösungsmittel. Die Polymerlösung, -emulsion oder -dispersion enthält im allgemeinen 0,2 bis 25 Gew.-%, vorzugsweise 1 - 15 Gew.-%, insbesondere 3 - 8 Gew.-% Polymer, jeweils bezogen auf das Gewicht der Lösung. Gegebenenfalls kann die Polymerlösung weitere Additive in jeweils wirksamen Mengen enthalten, beispielsweise Emulgatoren.

In Abhängigkeit von den jeweiligen Verfahrensparametern erhält man eher kugelförmige Hohlkörper mit wenigen oder keinen konkaven Oberflächensegmenten oder stark deformierte Teilchen. Kugelförmige Hohlkörper erhält man wenn die Eingangstemperatur nahe des Siedepunkts des Lösungsmittels oder darunter liegt und gleichzeitig oberhalb oder nahe der $T_G$ des gelösten Polymeren. Unter diesen Bedingungen wird das Lösungsmittel langsam entfernt und die Ausbildung der Kugelform begünstigt. In Umkehrung dieses Prinzips erhält man bei Eingangstemperaturen, die über dem Siedepunkt des Lösungsmittels und unterhalb der $T_G$ des Polymeren liegen, stark deformierte Teilchen mit zahlreichen konkaven Oberflächensegmenten.

Neben den partikelförmigen Hohlkörpern kann die vakuolenhaltige Schicht in einer weiteren Ausführungsform zusätzlich Pigmente enthalten. Pigmente umfassen im Sinne der vorliegenden Erfindung solche Teilchen, die im wesentlichen nicht zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 μm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 μm, vorzugsweise 0,01 bis 0,7 μm, insbesondere 0,01 bis 0,4 μm. Die vakuolenhaltige Schicht dieser Ausführungsform enthält Pigmente im allgemeinen in einer Menge von 1 bis 25 Gew.-%, insbesondere 2 bis 20 Gew.-%, bevorzugt 5 bis 15 Gew.-%, jeweils bezogen auf die vakuolenhaltige Schicht.

Übliche Pigmente sind Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g $TiO_2$-Teilchen, enthalten. Als besonders vorteilhaft hat es sich erwiesen, wenn die $TiO_2$-Teilchen mit $Al_2O_3$ oder mit $Al_2O_3$ und Polydimethylsiloxan beschichtet sind.

Die Dichte der erfindungsgemäßen Folien kann innerhalb weiter Grenzen variieren und hängt unter anderem von der Art des Matrixpolymeren und der Art und der Menge der Hohlkörper und der gegebenenfalls zugesetzten Pigmente sowie von Art, Dicke und Anzahl der zusätzlichen Schichten ab. Die Dichte der Folie liegt im allgemeinen unter der rechnerischen Dichte der Einzelkomponenten, d. h. die Dichte der Folie ist reduziert. Im allgemeinen haben die erfindungsgemäßen Folien eine Dichte von maximal 1,7 $g/cm^3$, vorzugsweise liegt die Dichte im Bereich von 0,4 bis 1,5 $g/cm^3$, insbesondere 0,5 bis 1,2 $g/cm^3$.

Die erfindungsgemäße mehrschichtige Ausführungsform der Folie umfaßt mindestens eine weitere vakuolenhaltige oder nicht vakuolenhaltige Schicht, welche die Basisschicht, eine Zwischenschicht oder eine siegelfähige oder nichtsiegelfähige Deckschicht der mehrschichtigen Folie sein kann.

Die andere Schicht enthält im allgemeinen 75 bis 100 Gew.-%, insbesondere 90 bis 99,5 Gew.-%, jeweils bezogen auf das Gewicht der anderen Schicht, thermoplastische Polymere, vorzugsweise olefinische Polymere mit 2 bis 25, insbesondere 2 bis 10 Kohlenstoffatomen, Polystyrole, Polyester, Polyamide und gegebenenfalls Additive in jeweils wirksamen Mengen. Besonders geeignet sind olefinische Polymere wie Polypropylen, Polyethylen wie HDPE, MDPE, LDPE, LLDPE und VLDPE sowie Polystyrole. Wie für die vakuolenhaltige Schicht sind auch für die andere Schicht Polyolefine, insbesondere Polypropylen bevorzugt.

Beispiele für bevorzugte Propylenpolymere sind

ein Propylenhomopolymer oder
ein Copolymer von

Ethylen und Propylen oder
Ethylen und Butylen-1 oder
Propylen und Butylen-1 oder

ein Terpolymer von
Ethylen und Propylen und Butylen-1 oder
eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit
einem Ethylengehalt von 1 bis 10 Gew.-%, bevorzugt 2,5 bis 8 Gew.-%, oder
statistische Propylen-Butylen-1-Copolymere mit
einem Butylengehalt von 2 bis 25 Gew.-%, bevorzugt 4 bis 20 Gew.-%,
jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 2 bis 20 Gew.-%, bevorzugt 4 bis 20 Gew.-%,
jeweils bezogen auf das Gesamtgewicht des Terpolymeren, oder

ein Blend aus einem Ethylen-Propylen-Butylen-1-Terpolymeren und einem Propylen-Butylen-1 -Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das in der/den anderen Schicht/en bevorzugt eingesetzte Propylenhomopolymere enthält 97 bis 100 Gew.-% Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, besonders bevorzugt ist. Das Homopolymere hat im allgemeinen einen Schmelzflußindex von 1,5 g/10 min bis 20 g/10 min, vorzugs-weise 2,0 g/10 min bis 15 g/10 min. Die angegebenen Gewichtsprozente beziehen sich auf das Polymere.

Die in der/den anderen Schichten eingesetzten vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Die in der/den Schichten eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen. Andere Schichten aus Co- und/oder Terpolymeren bilden vorzugsweise die Deckschichten von siegelfähigen Ausführungsformen der Folie.

Grundsätzlich kann die andere Schicht die vorstehend für die vakuolenhaltige Schicht beschriebenen Pigmente in entsprechenden Mengen enthalten. Ausführungsformen mit einer vakuolenhaltigen anderen Schicht enthalten analog der vorstehend beschriebenen vakuolenhaltigen Schicht partikelförmige Hohlkörper als vakuoleniniziierenden Füllstoff.

In einer weiteren vorteilhaften Ausführungsform können die in der vakuolenhaltigen Schicht und/oder anderen Schicht und/oder Basis- und/oder Zwischen- und/oder Deckschicht bevorzugt eingesetzten Propylenpolymeren durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1$ = Schmelzflußindex des Propylenpolymers vor dem Zusatz des organischen Peroxids
$MFI_2$ = Schmelzflußindex des peroxidisch abgebauten Propylenpolymeren

Erfindungsgemäß liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 5 bis 200 µm, wobei 10 bis 100 µm, insbesondere 20 bis 90 µm, bevorzugt sind. Die Dicke der gegebenenfalls vorhandenen Zwischenschicht/en beträgt jeweils unabhängig voneinander 2 bis 40 µm, wobei Zwischenschichtdicken von 3 bis 20 µm, insbesondere 3 bis 10 µm, bevorzugt sind. Die angegebenen Werte beziehen sich jeweils auf eine Zwischenschicht. Die Dicke der Deckschicht/en wird unabhängig von anderen Schichten gewählt und liegt bevorzugt im Bereich von 0,1 bis 10 µm, insbesondere 0,3 bis 5 µm, vorzugsweise 0,5 bis 2 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Um bestimmte Eigenschaften der bevorzugten erfindungsgemäßen Folie aus Polypropylen noch weiter zu verbessern, können sowohl die einschichtige vakuolenhaltige Schicht, eine weitere Schicht, die Basis-, die Zwischen- und/oder die Deckschicht/en der Mehrschichtfolie Zusätze in einer jeweils wirksamen Menge enthalten, gegebenenfalls mit dem Polymeren verträgliche niedermolekulare Kohlenwasserstoffharze und/oder vorzugsweise Antistatika und/oder unverträgliche Antiblockmittel und/oder Gleitmittel und/oder Stabilisatoren und/oder Neutralisationsmittel sowie Antiblockmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Ein niedermolekulares Harz wird bevorzugt z. B. zur Verbesserung der Wasserdampfdurchlässigkeit (WDD) und zur Verbesserung der Foliensteifigkeit zugesetzt. Kohlenwasserstoffharze sind niedermolekulare Polymere, deren Molekulargewicht im allgemeinen in einem Bereich von 300 bis 8 000, vorzugsweise 400 bis 5 000, vorzugsweise 500 bis 2 000, liegt. Damit ist das Molekulargewicht der Harze deutlich niedriger als das der Propylenpolymeren, welche die Hauptkomponente der einzelnen Folienschichten bilden und im allgemeinen ein Molekulargewicht von über 100 000 haben. Der Anteil des Harzes liegt in einem Bereich von 1 bis 30 Gew.-%, vorzugsweise 2 bis 10 Gew.-%. Der Erweichungspunkt des Harzes liegt zwischen 60 und 180 °C (gemessen nach DIN 1995-U4, entspricht ASTM E-28), vorzugsweise über 100 bis 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4.

Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω -Hydroxy-$(C_1-C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s.

Als Stabilisatoren können die üblichen stabilisierend wirkenden Verbindungen für Polymere, insbesondere die für Ethylen-, Propylen- und andere Olefinpolymere wirksamen, eingesetzt werden. Deren Zusatzmenge liegt zwischen 0,05 und 2 Gew.-%. Besonders geeignet sind phe-nolische Stabilisatoren, Alkali-/Erdalkistearate und/oder Alkali-/Erdalkicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxy-phenyl)-Propionat oder 1,3,5-Trimethyl-2,4,6-tris(3,5-di-Tertiärbutyl-4-Hydroxybenzyl)benzol sind besonders vorteilhaft.

Die Antiblockmittel werden bevorzugt den Deckschichten zugesetzt. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie COC, Polyamide, Polyester, Polycarbonate und dergleichen, bevorzugt werden Benzoguanamin-formaldehyd-Polymere, Siliciumdioxid und Calciumcarbonat. Die wirksame Menge an Antiblockmittel liegt im Bereich von 0,01 bis 10 Gew.-%, vorzugsweise 0,05 bis 5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m$^2$/g. Im allgemeinen wird das Neutralisationsmittel in einer Menge von 0,02 bis 0,1 Gew.-% zugesetzt.

Die Erfindung betrifft weiterhin ein Verfahren zur Herstellung der erfindungsgemäßen Folie nach dem an sich bekannten Extrusionsverfahren. Im Rahmen dieses Verfahrens wird so vorgegangen, daß die thermoplastischen Polymeren oder die Polymermischung zusammen mit den partikelförmigen Hohlkörpern in einem Extruder kompimiert und erwärmt werden, anschließend die der Folie bzw. den einzelnen Schichten der Folie entsprechenden Schmelzen durch eine Flachdüse extrudiert bzw. coextrudiert werden, die so erhaltene Folie zur Verfestigung auf einer oder mehreren Walze/n abgezogen wird, die Folie anschließend orientiert, die orientierte Folie thermofixiert und gegebenenfalls an der zur Behandlung vorgesehenen Oberfläche corona- oder flammbehandelt wird.

Nachfolgend wird die Herstellung der erfindungsgemäßen Folie zum Zwecke der Erläuterung der Erfindung am Beispiel der Polypropylenfolie näher beschrieben.

Bei der Herstellung von Polyolefinfolien, insbesondere Polypropylenfolien, hat es sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Die so erhaltene Vorfolie wird vorzugsweise längs und quer zur Extrusionsrichtung gestreckt, was zu einer biaxialen Orientierung der Molekülketten führt. Die biaxiale Orientierung kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist. Die Folie wird in Längsrichtung vorzugs-weise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

Die Temperaturen, bei denen die Längs- und die Querstreckung der Polypropylenfolien durchgeführt werden, können in einem großen Bereich variieren. Im allgemeinen wird die Längsstreckung bei 90 bis 150 °C, vorzugsweise 100 bis 140 °C, und die Querstreckung bei 140 bis 190 °C, vorzugsweise 150 bis 180 °C, durchgeführt.

An die biaxiale Streckung der Polypropylenfolie schließt sich ihre Thermofixierung (Wärmebehandlung) an, wobei die Folie etwa 0,5 bis 10 s lang bei einer Temperatur von 110 bis 130 °C gehalten wird. Anschließend wird die Folie in üblicher Weise mit einer Aufwickeleinrichtung aufgewickelt.

Gegebenenfalls kann/können wie oben erwähnt nach der biaxialen Streckung eine oder beide Oberfläche/n der Folie nach einer der bekannten Methoden corona- oder flammbehandelt werden, wobei für eine Flammbehandlung mit polarisierter Flamme (vgl. US-A-4,622,237) eine elektrische Gleichspannung zwischen einem Brenner (negativer Pol) und einer Kühlwalze angelegt wird. Die Höhe der angelegten Spannung beträgt zwischen 500 und 3 000 V, vorzugs-weise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die partikelförmigen Hohlkörper werden entweder in Reinform oder als granuliertes Konzentrat (Masterbatch) in die Folie eingearbeitet, indem das Granulat aus thermoplastischem Polymer oder Pulver mit den partikelförmigen Hohlkörpern in Reinform oder als Masterbatch vorgemischt und anschließend dem Extruder zugeführt wird. Im Extruder werden die Komponenten auf Verarbeitungstemperatur erwärmt. Im allgemeinen liegt die Extrusionstemperatur mindestens 5 °C, vorzugsweise 15 bis 180 °C, insbesondere 15 bis 150 °C, unter der $T_G$ bzw. der $T_V$ des inkompatiblen Polymeren, aus welchem der partikelförmige Hohlkörper hergestellt wurde.

Die partikelförmigen 1-20 konkave Oberflächensegmente aufweisenden oder in wesentlichen aus Polymerhaut bestehenden Hohlkörper wirken während der Orientierung der Folie ähnlich den aus der Literatur bekannten teilchenförmigen vakuoleniniziierenden Füllstoffen. Diese Schlußfolgerungen werden durch rasterelektronenmikroskopische Aufnahmen der orientierten Folie nahegelegt, welche zeigen, daß die Folie Vakuolen aufweist, innerhalb derer sich die partikelförmigen Hohlkörper aus inkompatiblen Polymer befinden.

Die erfindungsgemäße Folie zeichnet sich durch eine verringerte Dichte bei gleichem Gehalt an Füllstoffen aus wie z. B. eine mit $CaCO_3$ oder sphärischem PBT hergestellte Folie, welche nach dem Stand der Technik eingesetzt wird. Dadurch ist es möglich, den Füllstoffgehalt gegenüber bekannten Folien zu erhöhen, ohne daß dadurch die gewünschte niedrige Dichte verlorengeht. Weiterhin wurde gefunden, daß die Steifigkeit der Folie überraschenderweise deutlich verbessert werden konnte. Die Folie zeigt darüber hinaus kein unerwünschtes Auskreiden beim Schneiden und Verarbeiten. Die Herstellungskosten der Folie können durch verringerten Einsatz an vakuoleniniziierenden Teilchen gesenkt werden.

Die Erfindung wird nun anhand von Ausführungsbeispielen noch näher erläutert.

**A. Herstellung des inkompatiblen Polymeren**

**Beispiel 1**

Ein sauberer und trockener 1,5 dm$^3$-Polymerisationsreaktor mit Rührer wurde mit Stickstoff und dann mit Ethylen gespült und mit einer Lösung von 712 g Norbornen in 150 cm$^3$ Toluol gefüllt. Unter Rühren wurde dann der Reaktor auf eine Temperatur von 90 °C gebracht und 1 bar Ethylen aufgedrückt.

Danach wurden 5 cm$^3$ toluolische Methylaluminoxanlösung (10,1 Gew.-% Methylaluminoxan mit einer Molmasse von 1300 g/mol nach kryoskopischer Bestimmung) in den Reaktor dosiert und die Mischung 15 min bei 90 °C gerührt, wobei durch Nachdosieren der Ethylendruck bei 1 bar gehalten wurde (Sättigung der Lösung mit Ethylen). Parallel dazu wurden 5,5 mg Isopropylen(cyclopentadienyl)(1-indenyl)zirkondichlorid, in 5 cm$^3$ toluolischer Methylaluminoxanlösung (Konzentration und Qualität siehe oben) gelöst und durch 15 minütiges Stehenlassen voraktiviert. Dann wurde die Lösung des Komplexes in den Reaktor dosiert. Unter Rühren (750 Upm) wurde dann 2 Stunden bei 90 °C polymerisiert, wobei der Ethylendruck durch Nachdosieren bei 1 bar gehalten wurde. Dann wurde der Reaktorinhalt schnell in ein Rührgefäß abgelassen, in dem 10 cm$^3$ Isopropanol vorgelegt waren. Diese Mischung wurde in 2 dm$^3$ Aceton eingetropft und dann der suspendierte polymere Feststoff abfiltriert. Das abfiltrierte Polymer wurde dann in 1000 cm$^3$ einer Mischung aus zwei Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80 °C und 0,2 bar 15 Stunden getrocknet. Es wurde eine Produktmenge von 165 g erhalten. An dem Produkt wurde eine Glastemperatur $T_g$ von 276 °C gemessen. Die Viskositätszahl betrug 52 ml/g.

**Beispiel 2**

Beispiel 1 wurde wiederholt, jedoch wurde als Metallocen 4-($\eta^5$-Cyclopentadienyl)-4,7,7-trimethyl-($\eta^5$-4,5,6,7-tetrahydroindenyl)dichlorozirkonium verwendet. Die Reaktionszeit betrug 1 Stunde. Es wurden 325 g Polymer erhalten. Die Glastemperatur des Polymers betrug 256 °C. Die Viskositätszahl betrug 25 ml/g.

**B. Herstellung der partikelförmigen Hohlkörper**

**Beispiele 3-5**

In einem Sprühtrockner (Mini Spray Dryer, Büchi 190) wird das Polymer aus Beispiel 1 oder 2 in toluolischer Lösung wie in den nachfolgenden Beipielen 3 -6 beschrieben bei verschiedenen Temperaturen und in unterschiedlichen Konzentrationen und unter folgenden Bedingungen versprüht.

| | |
|---|---|
| Flow-Rate (N$_2$) | 500 Nl/h |
| Förderpumpenrate | 4 ml/min |
| Aspirator | 10 |
| N$_2$-Vordruck | 150 mbar |
| Filterdruck | 32,5 mbar |

**Beispiel 3**

3%ige Lösung des Polymeren aus Beispiel 1 in Toluol

Eingangstemperatur: 185 °C, Ausgangstemperatur: 105 °C
mittlerer Durchmesser der resuspendierten Partikel $d_n$ = 1,0 µm; $d_w/d_n$ = 1,7

**Beispiel 4**

2 %ige Lösung des Polymeren aus Beispiel 2 in Toluol,

Eingangsttemperatur: 150 °C, Ausgangstemperatur: 92 °C
mittlerer Durchmesser der mit 2 % Tween 20 in Wasser resuspendierten Partikel
$d_n$: 1,55 µm

**Beispiel 5**

4 %ige Lösung des Polymeren aus Beispiel 2 in Toluol

Eingangstemperatur: 160 °C, Ausgangstemeratur: 92 °C
mittlerer Durchmesser der resuspendierten Partikel $d_n$: 1,2 µm
$d_w/d_n$ : 1,6

**Beipiel 6**

4 %ige Lösung des Polymeren aus Beispiel 2 in Toluol

Eingangstemperatur: 208 °C, Ausgangstemperatur: 119 °C
mittlerer Durchmesser der resuspendierten Partikel $d_n$: 1,0 µm.
$d_w/d_n$ : 1,7

C. **Herstellung der erfindungsgemäßen Folien**

**Beispiel 7**

Es wurde durch Coextrusion und durch anschließende stufenweise Orientierung in Längs- und in Querrichtung eine opake dreischichtige Folie mit symmetrischem Aufbau mit einer Gesamtdicke von 40 µm hergestellt. Die Deckschichten hatten eine Dicke von jeweils 0,6 µm.

| A-Basisschicht (= vakuolenhaltige Schicht): | |
|---|---|
| 84,85 Gew.-% | hochisotaktisches Polypropylen der Firma Solvay mit dem Markennamen ®Eltex PHP 405 |
| 15,0 Gew.-% | eines Masterbatches aus 20 Gew.-% Hohlkörpern aus Beispiel 3 und 80 Gew.-% ® Eltex PHP 405 (= 3 Gew.-% Hohlkörper in der Schicht) |
| 0,15 Gew.-% | N,N-bis-ethoxyalkylamin |

| B-Deckschichten: | |
|---|---|
| 98,77 Gew.-% | statistisches Ethylen-Propylen-Copolymeres mit einem $C_2$-Gehalt von 4,5 Gew.-% |
| 0,33 Gew.-% | $SiO_2$ als Antiblockmittel mit einer mittleren Teilchengröße von 2 µm |
| 0,90 Gew.-% | Polydimethylsiloxan mit einer Viskosität von 30 000 mm$^2$/s |

Die Herstellungsbedingungen in den einzelnen Verfahrensschritten waren:

| | | | |
|---|---|---|---|
| Extrusion | Temperaturen | A-Schicht | 240 °C |
| | | B-Schichten | 240 °C |
| | Temperatur der Abzugswalze | | 30 °C |
| Längsstreckung | Temperatur | | 130 °C |
| | Längsstreckverhältnis | | 6,5 |
| Querstreckung | Temperatur | | 170 °C |
| | Querstreckverhältnis | | 8,5 |
| Fixierung | Temperatur | | 140 °C |
| | Konvergenz | | 15 % |

Die auf diese Weise hergestellte Folie ist opak und besitzt eine Dichte von 0,6 g/cm$^3$.

**Beispiel 8**

Im Vergleich zu Beispiel 7 wurden in der Basisschicht die Hohlkörper aus Beispiel 5 eingesetzt. Die hergestellte Folie hatte ein opakes Aussehen und eine Dichte von 0,58 g/cm$^3$.

**Beispiel 9**

Im Vergleich zu Beispiel 7 wurden in der Basisschicht die Hohlkörper aus Beispiel 6 eingesetzt. Die hergestellte Folie hatte ein opakes Aussehen und eine Dichte von 0,6 g/cm$^3$.

**Beispiel 10**

Im Vergleich zu Beispiel 7 wurden in der Basisschicht die Hohlkörper aus Beispiel 4 eingesetzt. Die hergestellte Folie hatte ein opakes Aussehen und eine Dichte von 0,56 g/cm$^3$.

**Vergleichsbeispiel 11**

Im Vergleich zu Beispiel 7 wurde der Basisschicht 4,3 % ® MP 52253 der Firma Multibase zugesetzt. Die auf diese Weise hergestellte Folie war opak und besitzt eine Dichte von 0,78 g/cm$^3$.

Zur Charakterisierung der Rohstoffe, der Hohlkörper und der Folien wurden die folgenden Meßmethoden benutzt:

Schmelzflußindex

Der Schmelzflußindex wurde in Anlehnung an DIN 53 735 bei 21,6 N Belastung und 230 °C gemessen.

Schmelzpunkt

DSC-Messung, Maximum der Schmelzkurve, Aufheizgeschwindigkeit 20 °C/min.

Dichte

Die Dichte wird nach DIN 53 479, Verfahren A, bestimmt.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichtdurchlässigkeit

Die Lichtdurchlässigkeit wird in Anlehnung an ASTM-D 1003-77 gemessen.

Mittleres Molekulargewicht und Molmassen-Dispersität

Die mittleren Molmassen ($M_w$, $M_n$) und die mittlere Molmassen-Dispersität ($M_w$/$M_n$) wurden in Anlehnung an DIN 55 672, Teil 1, mittels Gelpermeationschromatographie bestimmt. Anstelle von THF wurde als Elutionsmittel Orthodichlorbenzol verwendet. Da die zu untersuchenden olefinischen Polymeren bei Raumtemperatur nicht löslich sind, wird die gesamte Messung bei erhöhter Temperatur ($\sim$135 °C) durchgeführt.

Glastemperatur

Die Proben wurden mit Hilfe der DSC (Difference-Scanning-Calometry) untersucht. Die Aufheizgeschwindigkeit betrug 20 K/min. Um die thermische Vorgeschichte in der Probe zu eliminieren, wurde die Probe im DSC-Gerät zunächst über die Glastemperatur $T_G$ erhitzt, rasch abgekühlt und dann erneut erhitzt (zweites Aufheizen). Aus dem Thermogramm für das zweite Aufheizen wurde die Temperatur für den Glasübergang als halbe Stufenhöhe entnommen.

Vicat-Erweichungstemperatur

Die Vicat-Erweichungstemperatur VST/B/120 wurde nach 150 306, DIN 53 460 gemessen.

Photonenkorrelationsspektroskopie

Die Messung wurde wie in J.P. Fischer "Progress in Kolloid and Polymer Science, 77, Seite 180 - 194, 1988, beschrieben durchgeführt.

Partikelgrößenverteilung

Das Zahlenmittel $d_n$ und Gewichtsmittel $d_w$ der Partikelgröße werden aus der mittels PCS bestimmten Partikelgrößenverteilung nach gängigen mathematischen Verfahren bestimmt.

**Patentansprüche**

1. Orientierte Folie aus thermoplastischen Polymeren, die mindestens eine vakuolenhaltige Schicht enthält, die partikelförmige Hohlkörper enthält, bei denen eine im wesentlichen geschlossene Polymerhaut ein inneres gas- oder luftgefülltes Volumen umhüllt, wobei die Polymerhaut im wesentlichen aus Polymer besteht, das mit dem thermoplastischen Polymeren inkompatibel ist, und wobei
   der partikelförmige Hohlkörper 1-20 konkave Oberflächensegmente hat, und gegebenenfalls das im Hohlkörper eingeschlossene Volumen gegen null geht.

2. Folie nach Anspruch 1, **dadurch gekennzeichnet, daß** die Folie mindestens eine weitere Schicht aufweist.

3. Folie nach Anspruch 1 und/oder 2, **dadurch gekennzeichnet, daß** die vakuolenhaltige Schicht mindestens 60 Gew.-%, vorzugsweise 70 bis 99 Gew.-%, eines thermoplastischen Polymers, vorzugsweise eines Polyolefins, jeweils bezogen auf das Gewicht der vakuolenhaltigen Schicht, enthält.

4. Folie nach einem oder mehreren der Ansprüche 1 bis 3, **dadurch gekennzeichnet, daß** das thermoplastische Polymere ein Polypropylen ist.

5. Folie nach einem oder mehreren der Ansprüche 1 bis 4, **dadurch gekennzeichnet, daß** die vakuolenhaltige Schicht maximal 40 Gew.-%, vorzugs-weise 1 - 30 Gew.-%, bezogen auf das Gewicht der vakuolenhaltigen Schicht partikelförmige Hohlkörper enthält.

6. Folie nach einem oder mehreren der Ansprüche 1 bis 5, **dadurch gekennzeichnet, daß** mindestens 90 % der Hohlkörper einen maximalen Teilchendurchmesser im Bereich von 0,2 bis 20 μm, vorzugsweise 0,3 bis 7 μm, aufweisen.

7. Folie nach einem oder mehreren der Ansprüche 1 bis 6, **dadurch gekennzeichnet, daß** das inkompatible Polymere syndiotaktisches Polystyrol, Polyphenylensulfid (PPS), Polyetherketon (PEK), Polyamid (PA), Polyethylenterephthalat (PET), Polybutylenterephthalat (PBT), Polyaramid, Polyimid, halogeniertes Polymer, amorphes oder teilkristallines Cycloolefinpolymer sowie Methathesepolymer ist.

**8.** Folie nach einem oder mehreren der Ansprüche 1 bis 7, **dadurch gekennzeichnet, daß** die vakuolenhaltige Schicht zusätzlich Pigmente, vorzugs-weise TiO$_2$, enthält.

**9.** Folie nach einem oder mehreren der Ansprüche 1 bis 8, **dadurch gekennzeichnet, daß** die Dichte der Folie maximal 1,7 g/cm$^3$, vorzugsweise 0,4 bis 1,5 g/cm$^3$, beträgt.

**10.** Folie nach einem oder mehreren der Ansprüche 1 bis 9, **dadurch gekennzeichnet, daß** die vakuolenhaltige Schicht die Basisschicht, eine Zwischenschicht oder eine Deckschicht der Folie bildet.

**11.** Folie nach einem oder mehreren der Ansprüche 2 bis 10, **dadurch gekennzeichnet, daß** die weitere Schicht 75 bis 100 Gew.-% eines olefinischen Polymeren enthält.

**12.** Folie nach einem oder mehreren der Ansprüche 2 bis 11, **dadurch gekennzeichnet, daß** die weitere Schicht die Basisschicht, eine Zwischenschicht oder eine Deckschicht der Folie bildet.

**13.** Folie nach einem oder mehreren der Ansprüche 2 bis 12, **dadurch gekennzeichnet, daß** die weitere Schicht partikelförmige Hohlkörper als vakuoleniniziierenden Füllstoff enthält und Vakuolen aufweist.

**14.** Folie nach einem oder mehreren der Ansprüche 1 bis 13, **dadurch gekennzeichnet, daß** die weitere Schicht ein Pigment enthält.

**15.** Folie nach einem oder mehreren der Ansprüche 1 bis 14, **dadurch gekennzeichnet, daß** das Polypropylen der Basis-, einer Zwischen- und/oder einer Deckschicht peroxidisch abgebaut ist, wobei der Abbaufaktor A 3-15 beträgt und A : MFI$_2$/MFI$_1$ bedeutet (MFI : Schmelzfluß index vor Peroxid-Zusatz; MFI$_2$ = Schmelzfluß index nach Peroxid-Abban).

**16.** Folie nach Anspruch 1, **dadurch gekennzeichnet, daß** die Folie aus einer vakuolenhaltigen Schicht besteht.

**17.** Verfahren zur Herstellung einer Folie nach Anspruch 1, bei welchem die die Folie bildenden Polymeren und/oder Polymermischungen in einem Extruder komprimiert und erwärmt werden, anschließend die Schmelze/n durch eine Flachdüse extrudiert werden, die so erhaltene Folie auf einer oder mehreren Walzen abgezogen wird, die Folie anschließend orientiert und gegebenenfalls thermofixiert und oberflächenbehandelt wird, **dadurch gekennzeichnet, daß** die Extrusionstemperatur unter der Glastemperatur des inkompatiblen Polymeren liegt.

**18.** Verwendung von partikelförmigen 1-20 konkave Oberflächensegmente aufweisenden oder im wesentlichen aus Polymerhaut bestehende, Hohlkörpern als väkuoleniniziierenden Füllstoff in orientierten Folien aus thermoplastischem Polymer.

**19.** Polymermischung aus thermoplastischen Polymeren und 2 bis 70 Gew.-%, vorzugsweise 3 bis 40 Gew.-%, bezogen auf die Polymermischung, partikelförmiger Hohlkörper aus inkompatiblem Polymer, wobei die Hohlkörper 1-20 konkave Oberflächensegmente aufweisen oder im wesentlichen aus Polymerhaut bestehen.

**Claims**

**1.** An oriented film composed of thermoplastic polymers with at least one vacuole-containing layer, which vacuole-containing layer comprises particulate hollow bodies in which an essentially coherent polymer skin encompasses an inner volume of gas or of air, where the polymer skin essentially consists of polymer which is incompatible with the thermoplastic polymer, and where the particulate hollow body has 1-20 concave surface segments and, where appropriate, the volume enclosed in the hollow body tends toward zero.

**2.** A film as claimed in claim 1, wherein the film has at least one further layer.

**3.** A film as claimed in claim 1 and/or 2, wherein the vacuole-containing layer contains at least 60% by weight, preferably 70 to 99% by weight, of a thermoplastic polymer, preferably a polyolefin, each relative to the weight of the vacuole-containing layer.

4. A film as claimed in one or more of claims 1 to 3, wherein the thermoplastic polymer is polypropylene.

5. A film as claimed in one or more of claims 1 to 4, wherein the vacuole-containing layer contains at most 40% by weight, preferably 1-30% by weight, relative to the weight of the vacuole-containing layer, of particulate hollow bodies.

6. A film as claimed in one or more of claims 1 to 5, wherein at least 90% of the hollow bodies have a maximum particle diameter in the range from 0.2 to 20 $\mu$m, preferably 0.3 to 7 $\mu$m.

7. A film as claimed in one or more of claims 1 to 6, wherein the incompatible polymer is syndiotactic polystyrene, polyphenylene sulfide (PPS), polyether-ketone (PEK), polyamide (PA), polyethylene terephthalate (PET), polybutylene terephthalate (PBT), polyaramide, polyimide, a halogenated polymer, an amorphous or partially crystalline cycloolefin polymer or a metathesis polymer.

8. A film as claimed in one or more of claims 1 to 7, wherein the vacuole-containing layer additionally contains pigments, preferably $TiO_2$.

9. A film as claimed in one or more of claims 1 to 8, wherein the density of the film is at most 1.7 g/cm$^3$, preferably 0.4 to 1.5 g/cm$^3$.

10. A film as claimed in one or more of claims 1 to 9, wherein the vacuole-containing layer forms the base layer, an interlayer or a top layer of the film.

11. A film as claimed in one or more of claims 2 to 10, wherein the further layer contains 75 to 100% by weight of an olefinic polymer.

12. A film as claimed in one or more of claims 2 to 11, wherein the further layer forms the base layer, an interlayer or a top layer of the film.

13. A film as claimed in one or more of claims 2 to 12, wherein the further layer contains particulate hollow bodies as a vacuole-initiating filler and has vacuoles.

14. A film as claimed in one or more of claims 1 to 13, wherein the further layer contains a pigment.

15. A film as claimed in one or more of claims 1 to 14, wherein the polypropylene of the base layer, of an interlayer and/or of a top layer has been degraded by a peroxide mechanism, where the degradation factor A is 3-15, and A is $MFI_2/MFI_1$ ($MFI_1$ = melt flow index prior to peroxide addition; $MFI_2$ = melt flow index after peroxide degradation).

16. A film as claimed in claim 1, wherein the film is composed of a vacuole-containing layer.

17. A process for producing a film as claimed in claim 1, in which the polymers and/or polymer blends forming the film are compressed in an extruder and heated, the melt or melts are then extruded through a sheet die, the film thus obtained is drawn off on one or more rollers and the film is then oriented and, if appropriate, thermofixed and surface-treated, wherein the extrusion temperature is below the glass temperature of the incompatible polymer.

18. The use of particulate hollow bodies having 1-20 concave surface segments or essentially consisting of polymer skin as a vacuole-initiating filler in oriented films composed of thermoplastic polymer.

19. A polymer blend composed of thermoplastic polymers and 2 to 70% by weight, preferably 3 to 40% by weight, relative to the polymer blend, of particulate hollow bodies composed of an incompatible polymer, the hollow bodies having 1-20 concave surface segments or essentially consisting of polymer skin.

**Revendications**

1. Feuille orientée en polymères thermoplastiques, qui contient au moins une couche contenant des vacuoles, qui contient des corps creux en forme de particules, dans lesquels une peau en polymère essentiellement fermée enveloppe un volume interne rempli de gaz ou d'air, la peau en polymère étant essentiellement constituée de polymère qui est incompatible avec le polymère thermoplastique, et les corps creux en forme de particules présentant 1 à 20 segments de surface concaves et le volume inclus dans le corps creux allant, le cas échéant, vers zéro.

**2.** Feuille selon la revendication 1, **caractérisée en ce que** la feuille présente au moins une autre couche.

**3.** Feuille selon les revendications 1 et/ou 2, **caractérisée en ce que** la couche contenant des vacuoles contient au moins 60% en poids, de préférence 70 à 99% en poids, d'un polymère thermoplastique, de préférence une polyoléfine, à chaque fois par rapport au poids de la couche contenant des vacuoles.

**4.** Feuille selon l'une ou plusieurs des revendications 1 à 3, **caractérisée en ce que** le polymère thermoplastique est un polypropylène.

**5.** Feuille selon l'une ou plusieurs des revendications 1 à 4, **caractérisée en ce que** la couche contenant des vacuoles contient au maximum 40% en poids, de préférence 1 à 30% en poids de corps creux en forme de particules par rapport au poids de la couche contenant des vacuoles.

**6.** Feuille selon l'une ou plusieurs des revendications 1 à 5, **caractérisée en ce qu'**au moins 90% des corps creux présente un diamètre maximal de particule dans la plage de 0,2 à 20$\mu$m, de préférence de 0,3 à 7 $\mu$ m.

**7.** Feuille selon l'une ou plusieurs des revendications 1 à 6, **caractérisée en ce que** le polymère incompatible est un polystyrène syndiotactique, un poly(sulfure de phénylène) (PSP), une polyéthercétone (PEC), un polyamide (PA), du poly(téréphtalate d'éthylène) (PTE), un poly(téréphtalate de butylène) (PTB), un polyaramide, du polyimide, un polymère halogéné, un polymère de cyclooléfine amorphe ou partiellement cristallin, ainsi qu'un polymère de métathèse.

**8.** Feuille selon l'une ou plusieurs des revendications 1 à 7, **caractérisée en ce que** la couche contenant des vacuoles contient en outre des pigments, de préférence du $TiO_2$.

**9.** Feuille selon l'une ou plusieurs des revendications 1 à 8, **caractérisée en ce que** la densité de la feuille est d'au maximum 1,7 g/cm$^3$, de préférence de 0,4 à 1,5 g/cm$^3$.

**10.** Feuille selon l'une ou plusieurs des revendications 1 à 9, **caractérisée en ce que** la couche contenant des vacuoles forme la couche de base, une couche intermédiaire ou une couche de recouvrement de la feuille.

**11.** Feuille selon l'une ou plusieurs des revendications 2 à 10, **caractérisée en ce que** l'autre couche contient 75 à 100% en poids d'un polymère oléfinique.

**12.** Feuille selon l'une ou plusieurs des revendications 2 à 11, **caractérisée en ce que** l'autre couche forme la couche de base, une couche intermédiaire ou une couche de recouvrement.

**13.** Feuille selon l'une ou plusieurs des revendications 2 à 12, **caractérisée en ce que** l'autre couche contient des corps creux en forme de particules comme charge initiant des vacuoles et présente des vacuoles.

**14.** Feuille selon l'une ou plusieurs des revendications 1 à 13, **caractérisée en ce que** l'autre couche contient un pigment.

**15.** Feuille selon l'une ou plusieurs des revendications 1 à 14, **caractérisée en ce que** le polypropylène de la couche de base, d'une couche intermédiaire et/ou d'une couche de recouvrement est dégradé par un peroxyde, le facteur de dégradation A étant de 3 à 15 et A signifiant $MFI_2/MFI_1$ ($MFI_1$ = indice de fusion avant l'addition de peroxyde, $MFI_2$ = indice de fusion après la dégradation par un peroxyde).

**16.** Feuille selon la revendication 4, **caractérisée en ce que** la feuille est constituée d'une couche contenant des vacuoles.

**17.** Procédé pour la préparation d'une feuille selon la revendication 1, dans lequel les polymères et/ou les mélanges de polymères formant la feuille sont comprimés et chauffés dans une extrudeuse, la ou les masses fondues sont ensuite extrudées à travers une filière plate, la feuille ainsi obtenue est tirée sur un ou plusieurs cylindres, la feuille est ensuite orientée et, le cas échéant, thermofixée et traitée en surface, **caractérisé en ce que** la température d'extrusion est inférieure à la température de transition vitreuse du polymère incompatible.

18. Utilisation de corps creux en forme de particules présentant 1 à 20 segments de surface concaves ou constitués essentiellement de peau en polymère comme charge d'initiation de vacuoles dans des feuilles orientées en polymère thermoplastique.

19. Mélange de polymères constitué de polymères thermoplastiques et de 2 à 70% en poids, de préférence de 3 à 40% en poids, par rapport au mélange de polymères, de corps creux en forme de particules en polymère incompatible, les corps creux présentant 1 à 20 segments de surface concaves ou étant constitués essentiellement de peau en polymère.